# EUROPÄISCHE PATENTSCHRIFT

(11) **EP 1 288 474 B1**
(45) Veröffentlichungstag und Bekanntmachung des Hinweises auf die Patenterteilung: **09.07.2008**
(21) Anmeldenummer: 02016162.6
(22) Anmeldetag: 20.07.2002
(51) Int. Cl.: F02D 41/40, F02D 41/24

(54) **Verfahren und Vorrichtung zur Steuerung der Kraftstoffzumessung in eine Brennkraftmaschine**
Method and apparatus for controlling fuel metering in an internal combustion engine
Procédé et dispositif de commande du dosage en carburant pour un moteur à combustion interne

(30) Priorität: 25.08.2001 DE 10141700
(43) Veröffentlichungstag der Anmeldung: 05.03.2003
(73) Patentinhaber: ROBERT BOSCH GMBH, 70442 Stuttgart (DE)
(72) Erfinder: Jaudas, Rainer, 70825 Korntal-Muenchingen (DE); Blankenhorn, Ulrich, 71723 Grossbottwar (DE); Mayer, Timo, 75239 Eisingen (DE)

(56) Entgegenhaltungen:
- EP-A- 0 953 756
- EP-A- 1 070 839
- EP-A- 1 221 544
- US-A- 5 893 347

## Beschreibung

### Stand der Technik

Die Erfindung betrifft ein Verfahren und eine Vorrichtung zur Steuerung der Kraftstoffzumessung in eine Brennkraftmaschine.

Aus der DE-198 60 398 ist ein Verfahren und eine Vorrichtung zur Steuerung der Kraftstoffzumessung in eine Brennkraftmaschine bekannt. Ein Zumesszyklus wird dort in wenigstens eine erste Teileinspritzung und eine Haupteinspritzung aufgeteilt. Bei neueren Systemen kann vorgesehen sein, dass noch weitere Teileinspritzungen, insbesondere weitere Voreinspritzungen vorgesehen sind.

Aus der EP 953 756 ist ein System zur Steuerung einer Brennkraftmaschine bekannt, bei der eine Voreinspritzung und eine Haupteinspritzung erfolgt. Dabei wird zwischen einem Betriebszustand mit Voreinspritzung und einem Betriebszustand ohne Voreinspritzungen hin und her geschaltet. Dabei wird die Problematik gelöst, dass in dieser Übergangsphase die Teileinspritzmengen exakt berechnet werden müssen, da im anderen Fall ein Momentensprung oder andere abrupte Änderungen von Ausgangsgrößen auftreten.

Die Berechnung der Steuerwerte, die den Beginn und/oder die Dauer der einzelnen Teileinspritzungen festlegen, ist sehr aufwendig. So kann der Fall eintreten, dass sich zwei Einspritzungen gegenseitig beeinflussen. Dies ist insbesondere dann der Fall, wenn der Abstand zwischen zwei Teileinspritzungen kleiner als ein Schwellenwert ist. Des Weiteren kann der Fall eintreten, dass die Berechnung ergibt, dass bei einer Teileinspritzung die Einspritzdauer und/oder die Einspritzmenge zu klein bzw. zu kurz ist und daher diese Teileinspritzung nicht durchgeführt wird. Dieses Ausblenden einzelner Teileinspritzungen muss dann wiederum bei anderen Teileinspritzungen berücksichtigt werden.

### Vorteile der Erfindung

Dadurch, dass bei der Steuerung der Kraftstoffzumessung in eine Brennkraftmaschine, bei dem der Kraftstoff mit wenigstens einer ersten und einer zweiten Teileinspritzung zugemessen wird, in wenigstens zwei Berechnungsschritten jeweils wenigstens ein Steuerwert einer Teileinspritzung ermittelt wird, und der jeweilige Berechnungsschritt abgearbeitet wird, wenn ein Statusregister ein bestimmtes Muster aufweist, ist es möglich, die Berechnungen der Teileinspritzungen derart durchzuführen, dass die gegenseitigen Einflussnahmen berücksichtigt werden können und dass sich die Berechnungen gegenseitig nicht behindern. Des Weiteren kann der Aufwand an Ressourcen insbesondere an Rechenzeit und Rechnerkapazität deutlich minimiert werden.

Als besonders geeignete Maßnahmen haben sich hierbei erwiesen, dass die Berechnungsschritte in einer festen Reihenfolge erfolgen, dass bestimmte Berechnungsschritte nur einmalig und andere Berechnungsschritte wiederholt durchgeführt werden. Besonders vorteilhaft ist dabei, dass Berechnungsschritte von Steuerwerten, die durch Änderungen anderer Steuerwerte nicht beeinflusst werden, nur einmalig zu Beginn durchgeführt werden. Berechnungsschritte von Steuerwerten, die durch Änderungen andere Steuerwerte beeinflusst sind, werden bei Änderungen der anderen Steuerwerte wiederholt durchgeführt. Diese Neuberechnung erfolgt insbesondere wenn die Berechnung unzulässige Steuerwerte ergab. Unzulässige Steuerwerte liegen beispielsweise vor, wenn Größen, die die Ansteuerdauer charakterisieren, zu klein und/oder Größen, die Ansteuerbeginn und/oder das Ansteuerende charakterisieren, außerhalb eines bestimmten Winkelbereichs liegen.

Eine besonders einfache Überwachung, ob Berechnungsschritte durchgeführt werden müssen ergibt sich, wenn jedem Berechnungsschritt einer Teileinspritzung ein Bit zugeordnet ist. Vorzugsweise, werden die Bits, die einer Teileinspritzung zugeordnet sind zu einem Statusregisters zusammengefasst.

Besonders vorteilhaft ist es, dass die Berechnungsschritte sehr ähnlich ausgebildet sind. So umfassen die Berechnungsschritte vorzugsweise die folgenden Schritte. An die Abfrage eines Statusregisters schließt sich die Berechnung des Steuerwerts und die Überprüfung, ob das dem Berechnungsschritt zugeordnete Bedingungsbit des Statusregisters zu setzen ist an.

Weitere besonders vorteilhafte Ausgestaltungen der erfindungsgemäßen Vorgehensweise sind in den Unteransprüchen gekennzeichnet.

### Zeichnung

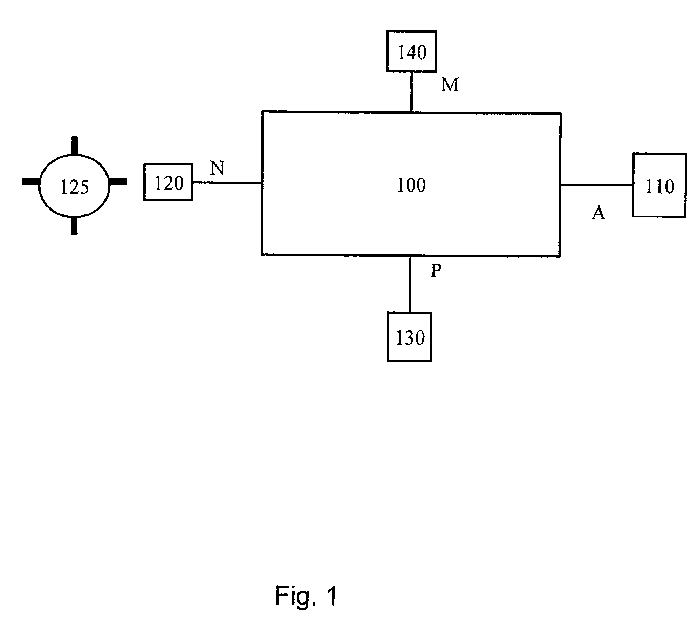

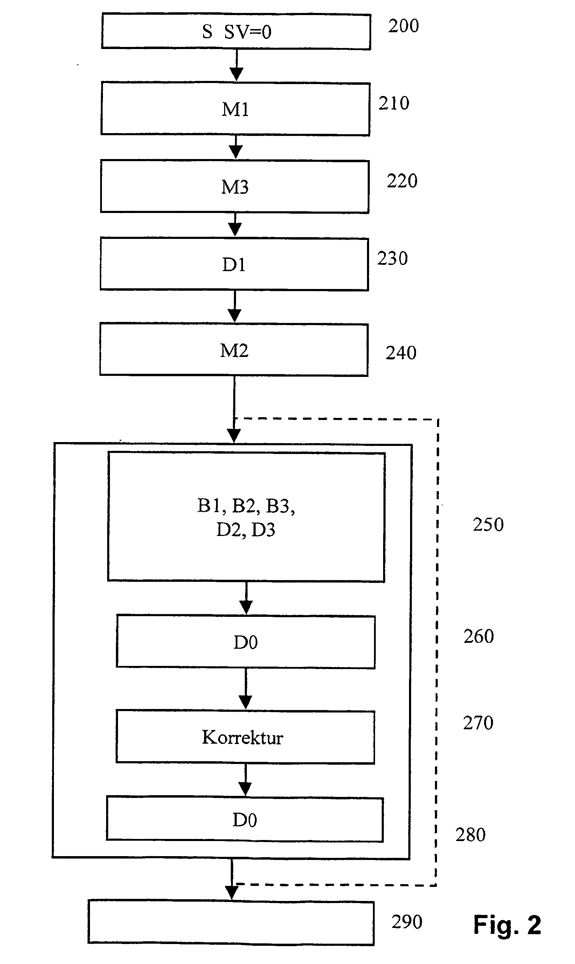

Die Erfindung wird nachstehend anhand einer Zeichnung dargestellten Ausführungsformen erläutert. Es zeigen Figur 1 ein Blockdiagramm einer Vorrichtung zur Steuerung der Kraftstoffzumessung und die Figuren 2 bis 4 verschiedene Ablaufdiagramme zur Verdeutlichung der erfindungsgemäßen Vorgehensweise.

### Beschreibung der Ausführungsbeispiele

In Figur 1 sind die wesentlichen Elemente eines Systems zur Steuerung der Kraftstoffzumessung in eine Brennkraftmaschine
Neue Ansprüche dargestellt. Die Steuerung ist mit 100 bezeichnet. Sie beaufschlagt einen Steller 110 mit Ansteuersignal A. Desweiteren ist ein Impulsrad 125 vorgesehen, das auf der Kurbel- und/oder der Nockenwelle angeordnet ist, und von einem Sensor 120 abgetastet wird, der mit der Steuerung 100 verbunden ist. Ferner sind weitere Sensoren 130 und 140 vorgesehen, die Signale erzeugen, die den Betriebszustand der Brennkraftmaschine sowie Umgebungsbedingungen charakterisieren.

Der Sensor 120 liefert Impulse, die in bestimmten Winkelstellungen der Kurbel- und/oder Nockenwelle auftreten. Vorzugsweise sind die Markierungen auf dem Impulsrad 125 derart angeordnet, dass jeweils im oberen Totpunkt eines Zylinders der Brennkraftmaschine ein Impuls auftritt. Desweiteren kann vorgesehen sein, dass Inkrementräder vorgesehen sind, die Impulse mit relativ kurzem Abstand von ca. 6 ° liefern. Der weitere Sensor 140 liefert ein Signal M, das den Fahrerwunsch charakterisiert. Hierbei handelt es sich vorzugsweise um ein Signal, das den Momentenwunsch an die Brennkraftmaschine charakterisiert. Diese Größe kann auch von einer anderen Steuereinheit bereitgestellt werden.

Ein weiterer Sensor 130 liefert vorzugsweise ein Signal P, das den Kraftstoffdruck charakterisiert. Bei einem sogenannten Common-Rail-System handelt es sich hierbei vorzugsweise um den Raildruck. Weitere Betriebskenngrößen und Umgebungsbedingungen können von nicht dargestellten Sensoren erfasst werden.

Ausgehend von den verschiedenen Betriebskenngrößen und/oder Umgebungsbedingungen berechnet die Steuerung 100 Ansteuersignale A zur Beaufschlagung des Stellers 110. Ausgehend von dem Fahrerwunsch bzw. dem Momentenwunsch M und der Drehzahl N der Brennkraftmaschine bestimmt die Steuerung 100 eine Größe, die die einzuspritzende Kraftstoffmenge bestimmt. Ferner wird ausgehend von verschiedenen Größen, wie beispielsweise dieser einzuspritzenden Kraftstoffmenge eine Größe bestimmt, die den Einspritzbeginn festlegt. Neben dem Momentenwunsch und der Drehzahl können auch weitere Größen, die den Betriebszustand des Fahrzeugs und/oder der Brennkraftmaschine charakterisieren, berücksichtigt werden. Ausgehend von den Größen, die den Einspritzbeginn und die einzuspritzende Kraftstoffmenge charakterisieren, berechnet die Steuerung 100 die Ansteuersignale A zur Beaufschlagung des Stellers 110.

Bei dem Steller 110 handelt es sich vorzugsweise um ein Magnetventil oder um einen sogenannten Piezoaktor. Abhängig von dem Ansteuersignal A nimmt der Steller 110 eine solche Position ein, dass eine Einspritzung erfolgt bzw. nicht erfolgt. Vorzugsweise wird ein Signal ausgegeben, das den Ansteuerbeginn und ein Signal, das das Ansteuerende festlegt.

Die Kraftstoffzumessung eines Verbrennungszykluses in einem Zylinder ist häufig in mehrere Teileinspritzungen aufgeteilt. Vorzugsweise wird pro Verbrennungszyklus eine kleine Voreinspritzung, eine größere Haupteinspritzung und in bestimmten Betriebszuständen, beispielsweise zur Abgasnachbehandlung, eine Nacheinspritzung durchgeführt. Die Haupteinspritzung ist dadurch charakterisiert, dass sie im Wesentlichen das von der Brennkraftmaschine abgegebene Moment charakterisiert. Ferner ist es möglich, dass die Voreinspritzung, die Haupteinspritzung oder die Nacheinspritzung jeweils in mehrere Voreinspritzungen, Haupteinspritzungen und/oder Nacheinspritzungen aufgeteilt werden.

Im Folgenden wird die erfindungsgemäße Vorgehensweise am Beispiel zweier Voreinspritzung und der Haupteinspritzung beschrieben. Die erfindungsgemäße Vorgehensweise kann aber auch auf andere Teileinspritzungen angewendet werden. Die erfindungsgemäße Vorgehensweise ist anwendbar, wenn wenigstens eine erste und eine zweite Teileinspritzung durchgeführt wird.

Erfindungsgemäß ist vorgesehen, dass die Berechnung der Steuerwerte für die einzelnen Teileinspritzungen in verschiedene Berechnungsschritte aufgeteilt werden. In jedem Berechnungsschritt werden ein oder mehrere Steuerwerte einer Teileinspritzung berechnet. Jeder Teileinspritzung ist ein Statusregister zugeordnet das anzeigt, ob eine Teileinspritzung freigegeben ist oder nicht. Jeder Teileinspritzung ist wenigstens eine Freigabebedingung zugeordnet. Jeder Freigabebedingung ist ein Bedingungsbit im Statusregister zugeordnet. Desweiteren enthält das Statusregister ein Freigabebit für die entsprechende Teileinspritzung, dieses Freigabebit zeigt an, dass die entsprechende Teileinspritzung ausgeführt werden darf. Im folgenden wird das Statusregister als Status bezeichnet.

Der Status ist jeweils als Bitleiste ausgebildet, bei der jedem Steuerwert einer Teileinspritzung ein Bedingungsbit zugeordnet ist. D.h. jedem Berechnungsschritt einer Teileinspritzung ist eine Freigabebedingung und damit ein Bedingungsbit des Status zugeordnet. Ergibt einer der Berechnungsschritte, dass ein unzulässiger Wert vorliegt, so wird das Bedingungsbit dieser Freigabedbedingung, das diesem Berechnungsschritt zugeordnet ist, zurückgesetzt. Dies hat zur Folge, dass das Muster des Status nicht mehr mit dem bestimmten Muster übereinstimmt. Ist eines dieser Bedingungsbits zurückgesetzt, so ist diese Teileinspritzung nicht möglich. Der Status enthält ferner ein Bit, das anzeigt, dass diese Teileinspritzung auf Grund von bestimmten Bedingungen, wie beispielsweise zur Geräuschreduktion oder Abgasnachbehandlung, gewünscht wird. Desweiteren enthält der Status das Freigabebit das anzeigt, ob die Einspritzung erfolgt oder abgeschaltet wird. Das Freigabebit wird dabei erst dann gesetzt, wenn eine Teileinspritzung gewünscht und möglich ist, das heißt das keines der Bedingungsbit zurückgesetzt ist. Sobald eines der Bedingungsbit zurückgesetzt ist, erfolgen keine weiteren Berechnungsschritte mehr für diese Teileinspritzung.

Beim Beginn jedes Berechnungsschrittes wird der Status mit einem vorgegebenen Muster verglichen und überprüft, ob die weiteren Berechnungen des Berechnungsschritts durchzuführen sind. Am Ende des Berechnungsschrittes werden die Freigabebedingungen überprüft und das Bedingungsbit der entsprechenden Freigabebedingung entsprechend gesetzt.

Sind alle Freigabebedingungen erfüllt, so wird das Freigabebit gesetzt und die Teileinspritzung erfolgt. Ist eine Freigabebedingung nicht erfüllt oder wird eine Teileinspritzung nicht gewünscht, so wird das zugehörige Freigabebit dieser Teileinspritzung nicht gesetzt.

Die erfindungsgemäße Vorgehensweise ist beispielhaft in Figur 2 beschrieben. In einem ersten Schritt 200 wird der Status S aller Teileinspritzungen mit entsprechenden Werten belegt. Insbesondere wird das Bit gesetzt, das anzeigt, dass diese Teileinspritzung auf Grund von bestimmten Bedingungen, wie beispielsweise zur Geräuschreduktion oder Abgasnachbehandlung, gewünscht wird. Wird die Teileinspritzung gewünscht, so wird in dem dargestellten Beispiel in allen Bits außer dem Freigabebit der Wert 1 eingetragen. Entsprechend wird eine Schleifenwert SV auf 0 gesetzt. Der Status der nicht gewünschten Teileinspritzungen wird mit dem Wert 0 besetzt.

Anschließend werden ab Schritt 210 die verschiedenen Berechnungsschritte durchgeführt, in denen die Steuerwerte bestimmt werden. In einem Schritt 210 wird die Menge ME1, die bei der ersten Voreinspritzung VE1 zugemessen ist, bestimmt.

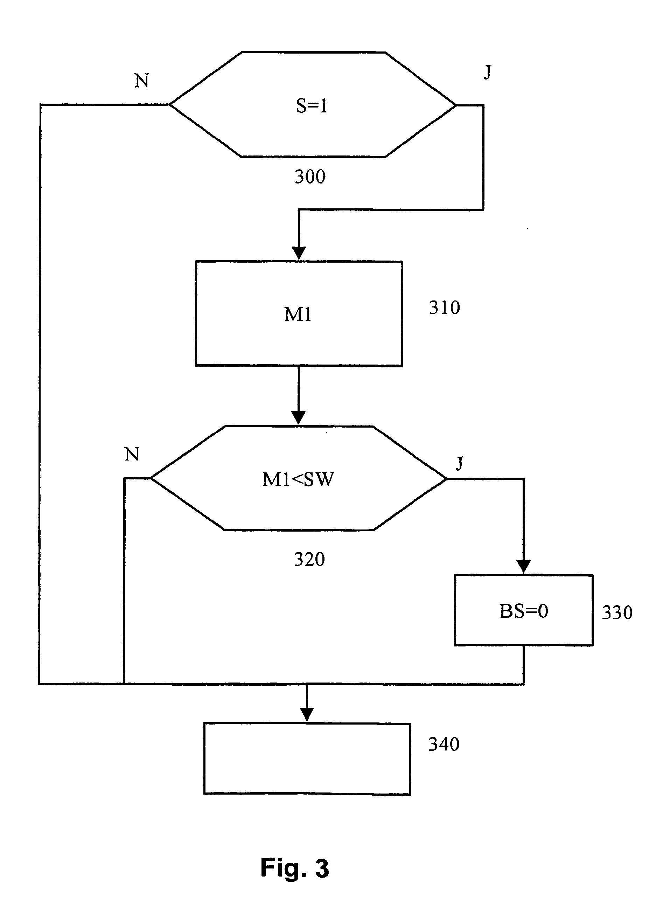

Dabei wird wie in dem Ablaufdiagramm der Figur 3 dargestellt vorgegangen. Eine erste Abfrage 300 überprüft, ob der Status S der ersten Teileinspritzung mit einem bestimmten Muster besetzt ist. In der dargestellten Ausführungsform ist vorgesehen, dass überprüft wird, ob der Status S mit 1 gesetzt ist. Ist dies nicht der Fall, so endet das Programm in Schritt 340. Ist der Status S mit 1 gesetzt, d.h. die erste Voreinspritzung VE1 soll erfolgen, so wird in Schritt 310 die Menge M1, die während der Voreinspritzung 1 zugemessen werden soll, berechnet. Anschließend überprüft die Abfrage 320, ob die Menge M1 kleiner als ein Schwellwert SW ist. Dieser Schwellwert ist so bemessen, dass Kraftstoffmengen, die unter einer Mindestmengen liegen, nicht ausgeführt werden. D.h. wird erkannt, dass die Menge M1 kleiner als eine Mindestmenge ist, so wird im folgenden Schritt 330 das entsprechende Bedingungsbit im Status BS der ersten Voreinspritzung auf 0 gesetzt. Anschließend an Schritt 330 endet das Programm mit Schritt 340. Erkennt die Abfrage 320, daß die Menge M1 nicht kleiner als der Schwellwert ist, so endet das Programm ebenfalls mit Schritt 340.

Im Schritt 220, der sich an den Schritt 210 anschließt, wird die Menge M3 der dritten Voreinspritzung berechnet. Diese Berechnung erfolgt entsprechend wie in Figur 3 dargestellt. Anschließend in Schritt 230 wird die Ansteuerdauer der ersten Voreinspritzung 1 vorgegeben. Dies erfolgt entsprechend der in der Figur 3 beschriebenen Vorgehensweise, wobei in Schritt 310 die Ansteuerdauer D1 berechnet und diese in Schritt 320 mit einem Schwellenwert verglichen wird.

Im anschließenden Schritt 240 wird die Menge M2 der zweiten Voreinspritzung entsprechend, wie in Figur 3 dargestellt, bestimmt.

Die nachfolgenden Berechnungsschritte 250, 260, 270 und 280 werden wiederholt abgearbeitet. In Schritt 250 werden die Ansteuerbeginne B1, B2 und B3 der ersten Voreinspritzung, der zweiten Voreinspritzung und der dritten Voreinspritzung berechnet. Falls die berechneten Ansteuerbeginne nicht möglich sind, wird das entsprechende Bedingungsbit im Status gelöscht. Dies erfolgt entsprechend der in Figur 3 dargestellten Vorgehensweise.

Ferner werden in Schritt 250 die Ansteuerdauern D2 und D3 der zweiten und dritten Voreinspritzung berechnet. Sind die entsprechenden Ansteuerdauern zu klein, wird ebenfalls das entsprechende Bedingungsbit im Status gelöscht. Sind die Voreinspritzungen unabhängig von Einwirkungen anderer Voreinspritzungen, so erfolgt in Schritt 260 die Berechnung der Mindestmenge D0 für die Haupteinspritzung. Ist die berechnete Mindestmenge D0 kleiner als ein Schwellwert, so wird das entsprechende Bedingungsbit im Status gelöscht.

Im anschließenden Schritt 270 folgt die Korrektur der Daten für die Voreinspritzungen, die durch Einwirkungen von anderen Voreinspritzungen betroffen sind. Anschließend in Schritt 280 folgt die Berechnung der Mindestmenge D0 für die Haupteinspritzung in Abhängigkeit der freigegebenen Voreinspritzungen mit Druckwellenkorrekturen. Ist die berechnete Mindestmenge kleiner als der Schwellenwert, so wird das entsprechende Bedingungsbit im Status gelöscht und ein Schleifenwert SV auf den Wert 0 gesetzt, der anzeigt, dass die Schleife nicht verlassen wird. Ist dieser Schleifenwert entsprechend, gesetzt, erfolgen die Berechnungsschritte 250 bis 280 erneut. Ist der Schleifenwert derart besetzt, dass diese verlassen wird, wird in Schritt 290 überprüft, ob alle Bedingungsbit und das Bit, das anzeigt, dass dies Teileinspritzung auf Grund von bestimmten Bedingungen gewünscht wird gesetzt sind. Ist dies der Fall, so wird das Freigabebit gesetzt und anschließend werden die berechneten Ansteuerwerte an die Steuerung übergeben, die diese in Ansteuersignale A umsetzt.

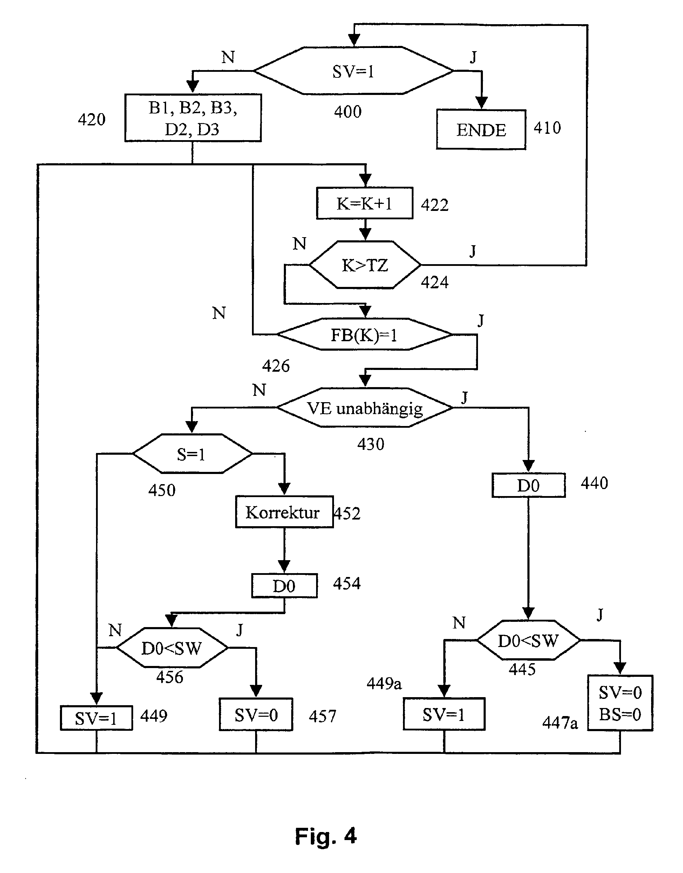

In Figur 4 sind die Berechnungen der Schritte 250 bis 280 anhand eines weiteren Ablaufdiagrammes dargestellt. In einem ersten Schritt 400 wird überprüft, ob ein Schleifenwert SV mit 1 gesetzt ist. Ist dies der Fall, so endet das Programm in Schritt 410. Ist dies nicht der Fall, so erfolgt in Schritt 420 die Berechnung der Ansteuerbeginne B1 B2, und B3 der ersten, zweiten und dritten Voreinspritzungen. Ferner erfolgt die Berechnung der Ansteuerdauern D2 und D3. Dies entspricht im Wesentlichen dem Schritt 250 in Figur 2. Die Berechnung der einzelnen Ansteuerwerte, d.h. der Werte B1, B2, B3, D2 und D3 erfolgt in ähnlicher Weise wie bei der in Figur 3 dargestellte Vorgehensweise. Dabei wird entsprechend wie in Schritt 320 überprüft, ob die Ansteuerbeginne möglich sind, d.h. vorzugsweise wird überprüft, ob die Ansteuerbeginne in einem bestimmten Winkelbereich der Kurbelwelle auftreten. Ist dies nicht der Fall, so wird das entsprechende Bedingungsbit im Status zurückgesetzt. Bei den Ansteuerdauern D2 und D3 wird überprüft, ob diese kleiner als ein Schwellwert sind. Ist dies der Fall, so wird ebenfalls der entsprechende Bedingungsbit im Status zurückgesetzt.

Im Anschluss an Schritt 420 werden nacheinander für die einzelnen Voreinspritzungen die weiteren Programmschritte abgearbeitet. Sind die Programmschritte 430 bis 457 für eine Teileinspritzung abgearbeitet. So werden für die nächste Teileinspritzung erneut die Schritte 430 bis 457 abgearbeitet. Sind diese für alle Teileinspritzungen abgearbeitet erfolgt erneut Schritt 400. Dies wird in der dargestellten Ausführungsform mittels eines Zählers K realisiert.

Im Anschluß an Schritt 420 wird der Zähler K um 1 erhöht. Die sich anschließende Abfrage 424 überprüft, ob der Inhalt des Zählers K größer als TZ ist. TZ ist dabei die maximale Anzahl von Teileinspritzungen. Ist dies der Fall, das heißt die Schritte 430 bis 457 sind für alle Teileinspritzungen abgearbeitet, so wird der Zähler K zurückgesetzt und das Programm setzt mit Schritt 400 fort. Ist der Inhalt des Zählers nicht größer als TZ, das heißt die Schritte 430 bis 457 sind noch nicht für alle Teileinspritzungen abgearbeitet, so überprüft die Abfrage 426, ob der Status der nächsten abzuarbeitenden Teileinspritzung mit dem bestimmten Muster übereinstimmt. Ist dies nicht der Fall, so folgt erneut Schritt 422. Ist dies der Fall, so werden für diese Teileinspritzung die Schritte 430 bis 457 abgearbeitet.

Die Abfrage 430 überprüft, ob die Voreinspritzung unabhängig ist von den übrigen Voreinspritzungen. Dies bedeutet die Abfrage 430 überprüft, ob eine Druckwellenkorrektur erforderlich ist. Dies erfolgt vorzugsweise ausgehend von dem Abstand der Teileineinspritzungen voneinander.

Ist dies der Fall, so wird in Schritt 440 die Einspritzmenge D0 für die Haupteinspritzung berechnet. Die anschließende Abfrage 445 überprüft, ob diese Einspritzmenge kleiner als eine Mindestmenge SW ist. Ist dies der Fall, so wird in Schritt 447a der Schleifenwert SV auf 0 gesetzt, der anzeigt, dass die Schleife erneut berechnet werden muss. Gleichzeitig wird in Schritt 447a für diese Teileinspritzung das entsprechende Freigabebit im Status S auf 0 zurückgesetzt. Ist die Mindesteinspritzmenge von der Haupteinspritzung nicht kleiner als der Schwellwert, so wird in Schritt 449a der Schleifenwert auf 1 gesetzt der anzeigt, dass die Schleife verlassen werden kann. Anschließend erfolgt Schritt 422 zur Berechnung der nächsten Teileinspritzung.

Erkennt die Abfrage 430, dass die Voreinspritzung abhängig von einer anderen Einspritzung ist, so überprüft die Abfrage 450, ob der Status S dieser Voreinspritzung einem bestimmten Muster entspricht. Ist dies der Fall, so erfolgt in Schritt 452 eine Korrektur der Voreinspritzungen, die durch diese Voreinspritzung beeinflußt werden kann. Anschließend in Schritt 454 erfolgt die Berechnung der Mindestmenge D0 entsprechend wie in Schritt 440. Anschließend überprüft die Abfrage 456, ob die Mindestmengen D0 kleiner als der Schwellenwert SW ist. Ist dies der Fall, so wird entsprechend wie in Schritt 447 in Schritt 457 die Schleifenvariable auf 0 und das Statusbit auf 0 gesetzt. Ist der Wert D0 nicht kleiner als der Schwellwert, bzw. ist der Statusbit ungleich 0, wird in Schritt 449 die Schleifenvariable SV auf 1 gesetzt. Anschließend an die Schritte 449 und 457 erfolgt Schritt 422 zur Berechnung der nächsten Teileinspritzung. Dies bedeutet, wenn keine Korrektur anderer Teileinspritzungen erfolgt und die Mindestmenge D0 für die Haupteinspritzung erreicht ist, wird der Schleifenwert auf einen solchen Wert gesetzt, dass die Schleife verlassen wird. Dies bedeutet, wenn keine Korrektur anderer Teileinspritzungen erfolgt und die Mindestmenge D0 für die Haupteinspritzung erreicht ist, erfolgt keine erneute Berechnung der Ansteuerwerte.

Erfindungsgemäß ist vorgesehen, dass die Berechnung der verschiedenen Steuerwerte die einzelnen Teileinspritzungen in einer festen Reihenfolge erfolgen. Dabei ist vorgesehen, dass eine erste Gruppe von Berechnungsschritten, dies sind insbesondere die Berechnungsschritte 210 bis 240, zu Beginn einmalig erfolgen. Weitere Berechnungsschritte, dies sind insbesondere die Berechnungsschritte 250 bis 280, werden dagegen wiederholt durchgeführt.

Bei der ersten Gruppe von Berechnungsschritten handelt es sich um Berechnungen, die durch andere Einspritzungen nicht beeinflusst werden. Steuerwerte, die durch andere Berechnungen beeinflusst werden, sind in der zweiten Gruppe zusammengefasst. Ändert sich einer der Steuerwerte aufgrund einer Korrektur, so werden diese Berechnungsschritte der übrigen Teileinspritzungen nochmals abgearbeitet.

Der Aufbau der einzelnen Berechnungsschritte ist recht ähnlich und ist in Figur 3 dargestellt. Bei jedem Berechnungsschritt erfolgt zuerst die Abfrage des Statuswertes der entsprechenden Teileinspritzung. Schließlich wird der Steuerwert berechnet. Ferner erfolgt eine Überprüfung, ob der berechnete Steuerwert einen zulässigen Wert annimmt. Werden Einspritzmengen, bzw. Ansteuerdauern berechnet, so wird überprüft, ob diese größer als ein Schwellenwert sind. Wird ein Ansteuerbeginn berechnet, so wird überprüft, ob dieser in einem zulässigen Bereich liegt. Ist dies der Fall, d.h. der Ansteuerbeginn liegt in einem erlaubten Bereich und die Ansteuerdauer, bzw. die Einspritzmenge überschreitet einen Schwellwert, so wird der Statuswert entsprechend gesetzt, dass diese Einspritzung erfolgen kann. Sind die Werte unzulässig, bzw. kleiner als der Schwellwert, so wird der entsprechende Statuswert zurückgesetzt.

Von den in Figur 2 dargestellten Berechnungsschritten werden nur diese ausgeführt, bei denen der Status dem vorgegebenen Muster annimmt. Wird während der Berechnung in einem Berechnungsschritt ein Ansteuerwert erkannt, der nicht in einem zulässigen Bereich liegt, so wird die entsprechende Freigabebedingung gelöscht. Dies hat zur Folge, dass der Status nicht mehr dem erwarteten Muster entspricht. Dies wiederum hat zur Folge, dass die nachfolgenden Berechnungen der entsprechenden Teileinspritzung nicht mehr durchgeführt werden. Wird erkannt, dass eine der Teileinspritzungen nicht mehr durchgeführt wird, das heißt abzuschalten ist, werden bestimmte Berechnungsschritte für die übrigen Teileinspritzungen, dies sind insbesondere die Schritte 250 bis 280, erneut durchgeführt.

Mittels des Freigabebits wird dem weiteren Einspritzsystem mitgeteilt, dass diese Einspritzung abgeschaltet ist. Anhand der einzelnen Bits kann angezeigt werden, aufgrund welcher Bedingung die entsprechende Teileinspritzung abgeschaltet wurde.

## Patentansprüche

1. Verfahren zur Steuerung der Kraftstoffzumessung in eine Brennkraftmaschine, bei dem der Kraftstoff mit wenigstens einer ersten und einer zweiten Teileinspritzung zugemessen wird, wobei in wenigstens zwei Berechnungsschritten jeweils wenigstens ein Steuerwert einer Teileinspritzung ermittelt wird, wobei der jeweilige Berechnungsschritt abgearbeitet wird, wenn ein Statusregister ein bestimmtes Muster aufweist, **dadurch gekennzeichnet, dass** in einer ersten Gruppe von Berechnungsschritten, Steuergrößen berechnet, die durch andere Berechnungsschritte nicht beeinflusst werden und dass in einer zweiten Gruppe von Berechnungsschritten, Steuergrößen berechnet, die durch andere Berechnungsschritte beeinflusst werden, dass die Berechnungsschritte der ersten Gruppe einmal bei jedem Verbrennungszyklus durchgeführt werden und dass bei einer Änderung des Statusregisters einer Teileinspritzung die zweite Gruppe von Berechnungsschritten für die übrigen Teileinspritzungen wiederholt werden.

2. Verfahren nach Anspruch 1, **dadurch gekennzeichnet, dass** die Berechnungsschritte in einer festen Reihenfolge erfolgen.

3. Verfahren nach einem der vorhergehenden Ansprüche, dass jeder Teileinspritzung wenigstens ein Bit des Statusregisters zugeordnet ist.

4. Verfahren nach einem der vorhergehenden Ansprüche, dass jedem Berechnungsschritt ein Bit des Statusregisters zugeordnet ist.

5. Verfahren nach Anspruch 1 oder 2, **dadurch gekennzeichnet, dass** die Berechnungsschritte die Abfrage des Statusregisters, die Berechnung des Steuerwerts und die Überprüfung, ob das dem Berechnungsschritt zugeordnete Bit des Statusregisters zu setzen ist, beinhalten.

6. Verfahren nach Anspruch 5, **dadurch gekennzeichnet, dass** sich das Statusregister einer Teileinspritzung ändert, wenn die Steuerwerte unzulässige Werte annehmen.

7. Vorrichtung zur Steuerung der Kraftstoffzumessung in eine Brennkraftmaschine, bei dem der Kraftstoff mit wenigstens einer ersten und einer zweiten Teileinspritzung zugemessen wird, mit Mitteln, die in wenigstens zwei Berechnungsschritten jeweils wenigstens ein Steuerwert einer Teileinspritzung ermitteln, wobei der jeweilige Berechnungsschritt abgearbeitet wird, wenn ein Statusregister ein bestimmtes Muster aufweist, **dadurch gekennzeichnet, dass** Mittel vorgesehen sind, die in einer ersten Gruppe von Berechnungsschritten, Steuergrößen berechnen, die durch andere Berechnungsschritte nicht beeinflusst werden und die in einer zweiten Gruppe von Berechnungsschritten, Steuergrößen berechnen, die durch andere Berechnungsschritte beeinflusst werden, dass die Mittel die Berechnungsschritte der ersten Gruppe einmal bei jedem Verbrennungszyklus durchführen und dass die Mittel bei einer Änderung des Statusregisters einer Teileinspritzung die zweite Gruppe von Berechnungsschritten für die übrigen Teileinspritzungen wiederholen.

## Claims

1. Method for controlling the metering of fuel into an internal combustion engine, in which method the fuel is metered by way of at least one first and one second part injection, in each case at least one control value of a part injection being determined in at least two calculation steps, the respective calculation step being processed when a status register has a defined pattern, **characterized in that** control variables which are not influenced by other calculation steps are calculated in a first group of calculation steps, and **in that** control variables which are influenced by other calculation steps are calculated in a second group of calculation steps, **in that** the calculation steps of the first group are carried out once during each combustion cycle, and **in that**, if the status register of a part injection changes, the second group of calculation steps are repeated for the remaining part injections.

2. Method according to Claim 1, **characterized in that** the calculation steps take place in a fixed sequence.

3. Method according to one of the preceding claims, **characterized in that** each part injection is assigned at least one bit of the status register.

4. Method according to one of the preceding claims, **characterized in that** each calculation step is assigned one bit of the status register.

5. Method according to Claim 1 or 2, **characterized in that** the calculation steps comprise the interrogation of the status register, the calculation of the control value and the checking of whether that bit of the status register which is assigned to the calculation step is to be set.

6. Method according to Claim 5, **characterized in that** the status register of a part injection changes if the control values assume impermissible values.

7. Apparatus for controlling the metering of fuel into an internal combustion engine, in which method the fuel is metered by way of at least one first and one second part injection, having means which determine in each case at least one control value of a part injection in at least two calculation steps, the respective calculation step being processed when a status register has a defined pattern, **characterized in that** means are provided which calculate control variables which are not influenced by other calculation steps in a first group of calculation steps and calculate control variables which are influenced by other calculation steps in a second group of calculation steps, **in that** the means carry out the calculation steps of the first group once during each combustion cycle, and **in that**, if the status register of a part injection changes, the means repeat the second group of calculation steps for the remaining part injections.

## Revendications

1. Procédé de commande du dosage du carburant d'un moteur à combustion interne selon lequel on dose le carburant par au moins une première et une seconde injection partielle,
et dans au moins deux étapes de calcul, on détermine chaque fois au moins une valeur de commande d'une injection partielle,
l'étape de calcul respective étant traitée si un registre d'état présente un motif déterminé,
**caractérisé en ce que**
dans un premier groupe d'étapes de calcul, on calcule des grandeurs de commande qui ne sont pas influencées par d'autres étapes de calcul ; et
dans un second groupe d'étapes de calcul, on calcule les grandeurs de commande influencées par d'autres étapes de calcul,
les étapes de calcul du premier groupe étant effectuées une fois à chaque cycle de combustion ; et
en cas de variation du registre d'état d'une injection partielle, on répète le second groupe d'étapes de calcul pour les autres injections partielles.

2. Procédé selon la revendication 1,
**caractérisé en ce que**
les étapes de calcul se suivent dans un ordre fixe.

3. Procédé selon l'une des revendications précédentes,
**caractérisé en ce qu'**
à chaque injection partielle est associé au moins un bit du registre d'état.

4. Procédé selon l'une des revendications précédentes,
**caractérisé en ce qu'**
à chaque étape de calcul est associé un bit du registre d'état.

5. Procédé selon l'une des revendications 1 ou 2,
**caractérisé en ce que** les étapes de calcul comprennent l'interrogation du registre d'état, le calcul de la valeur de commande et le contrôle pour déterminer si le bit du registre d'état associé à l'étape de calcul doit être mis.

6. Procédé selon la revendication 5,
**caractérisé en ce que**
le registre d'état modifie une injection partielle si les valeurs de commande prennent des valeurs inacceptables.

7. Dispositif de commande du dosage du carburant d'un moteur à combustion interne selon lequel le carburant est dosé par au moins une première et une seconde injection partielle, comprenant des moyens qui déterminent dans au moins deux étapes de calcul, chaque fois au moins une valeur de commande d'une injection partielle,
on traite l'étape de calcul respective si un registre d'état possède un motif déterminé,
**caractérisé par**
des moyens qui calculent des grandeurs de commande dans un premier groupe d'étapes de calcul, grandeurs qui ne sont pas influencées par d'autres étapes de calcul ; et
qui calculent des grandeurs de commande dans un second groupe d'étapes de calcul qui sont influencées par d'autres étapes de calcul de façon que les moyens qui effectuent les étapes de calcul du premier groupe soient exécutés une fois à chaque cycle de combustion ; et
les moyens qui en cas de variation du registre d'état d'une injection partielle répètent le second groupe d'étapes de calcul pour les autres injections partielles.
